Europäisches Patentamt

European Patent Office

Office européen des brevets

(19)

(11) Numéro de publication : 0 094 883
B1

(12) FASCICULE DE BREVET EUROPÉEN

(45) Date de publication du fascicule du brevet :
26.03.86

(21) Numéro de dépôt : 83400966.4

(22) Date de dépôt : 11.05.83

(51) Int. Cl.⁴ : G 21 C 19/36, B 23 D 23/00,
B 23 D 35/00

(54) Dispositif de cisaillage d'assemblages combustibles irradiés.

(30) Priorité : 18.05.82 FR 8208701

(43) Date de publication de la demande :
23.11.83 Bulletin 83/47

(45) Mention de la délivrance du brevet :
26.03.86 Bulletin 86/13

(84) Etats contractants désignés :
BE DE GB

(56) Documents cités :
WO-A-79 /002 18
DE-A- 1 789 115
DE-A- 2 009 081
FR-A- 2 336 206

(73) Titulaire : COMMISSARIAT A L'ENERGIE ATOMIQUE
Etablissement de Caractère Scientifique Technique
et Industriel
31/33, rue de la Fédération
F-75015 Paris (FR)

(72) Inventeur : Dubost, René
Le Pigeonnier Saint Gervois
F-30200 Bagnol sur Ceze (FR)
Inventeur : Fiori, Robert
Saint Laurent La Vernede
F-30330 Connaux (FR)
Inventeur : Seyfried, Philippe
2, rue François Mauriac
F-30200 Bagnols sur Ceze (FR)

(74) Mandataire : Mongrédien, André et al
c/o BREVATOME 25, rue de Ponthieu
F-75008 Paris (FR)

Jouve, 18, rue St-Denis, 75001 Paris, France

## Description

La présente invention se rapporte à un dispositif de cisaillage d'éléments tubulaires pouvant être contaminés, destiné à découper ces assemblages en tronçons de faible longueur.

De façon connue, les dispositifs de cisaillage comprennent généralement une cellule de confinement dans laquelle est disposé un châssis supportant au moins une contre-lame fixe, au moins un chariot serre-flanc apte à appliquer un assemblage à cisailler contre la contre-lame et au moins un chariot porte-lame apte à se déplacer selon une direction perpendiculaire à la contre-lame, pour cisailler ledit assemblage.

Ces dispositifs de cisaillage nécessitent des interventions d'exploitation relativement fréquentes afin notamment de remplacer les pièces d'usure telles que la lame et la contre-lame. De plus, ces interventions doivent être faites en préservant le confinement et en empêchant autant que possible la dispersion de la contamination.

Dans les dispositifs de cisaillage existant à ce jour, toute intervention d'exploitation nécessite le démontage d'un couvercle obturant les extrémités supérieures du châssis, afin d'avoir accès aux pièces d'usure et notamment à la lame et à la contre-lame. Compte tenu de la nécessité d'effectuer ces opérations à distance, par exemple à l'aide de télémanipulateurs, le temps d'intervention est particulièrement long. Cette durée des interventions d'exploitations de type courant est d'autant plus gênante que les dispositifs de cisaillage constituent généralement l'un des postes d'une chaîne de traitement du combustible irradié et que l'ensemble de la chaîne est alors arrêté.

De plus, ces interventions d'exploitation nécessitent comme on l'a vu le démontage du couvercle obturant normalement le châssis de façon étanche, ce qui a pour effet de contaminer l'ensemble de l'enceinte de confinement et des appareillages qu'elle contient, ce qui n'est évidemment pas souhaitable.

La présente invention a précisément pour objet un dispositif de cisaillage ne présentant pas les inconvénients des dispositifs de la technique antérieure et autorisant notamment un temps d'intervention sensiblement réduit lorsqu'une pièce d'usure telle que la lame ou la contre-lame doit être remplacée, ainsi qu'une réduction de la dispersion de la contamination.

A cet effet et conformément à la présente invention, il est proposé un dispositif de cisaillage d'assemblages combustibles irradiés du type défini précédemment, ce dispositif étant caractérisé en ce que la contre-lame est montée sur un chariot contre-lame normalement en appui contre un organe amovible, le chariot contre-lame, le chariot serre-flanc et le chariot porte-lame étant montés sur des rails disposés selon une direction perpendiculaire à la contre-lame, la cellule de confinement communiquant avec une cellule d'intervention par un passage normalement obturé par un opercule, les rails se prolongeant dans la cellule d'intervention par ledit passage, dont les dimensions permettent d'acheminer lesdits chariots dans la cellule d'intervention lorsque l'organe amovible et l'opercule sont escamotés.

Grâce à ces caractéristiques, on conçoit qu'il est facile, en commandant à distance les déplacements de l'organe amovible et de l'opercule, d'acheminer les chariots dont les pièces d'usure doivent être remplacées dans la cellule d'intervention prévue à cet effet. Aucun démontage n'étant nécessaire, ces opérations s'effectuent avec un gain de temps considérable par rapport aux dispositifs de cisaillage de la technique antérieure. En outre, elles n'entraînent pas de dispersion de la contamination dans l'enceinte de confinement, dont les appareils restent ainsi protégés. Enfin, étant donné que les chariots portant notamment la lame et la contre-lame sont montés sur des rails fixes, ils sont remarquablement positionnés les uns par rapport aux autres, ce qui n'était pas possible dans les dispositifs de la technique antérieure.

En dehors des interventions d'exploitation qui sont bien entendu les plus fréquentes, il peut être nécessaire de sortir du châssis l'ensemble des pièces qu'il contient, par exemple lorsque les rails sont endommagés. A cet effet, le châssis est de préférence obturé à son extrémité supérieure par un couvercle amovible à l'intérieur de la cellule de confinement et portant une partie des rails. On notera toutefois que ce type d'intervention d'ultime secours nécessitant la sortie de l'ensemble complet par le dessus n'est prévu ici que pour des opérations très exceptionnelles, les interventions d'exploitation les plus courantes s'effectuant comme on l'a vu par l'enceinte d'intervention prévue à cet effet conformément à l'invention.

On décrira maintenant, à titre d'exemple non limitatif, un mode de réalisation particulier de l'invention en se référant aux dessins annexés dans lesquels :

la figure 1 est une vue de côté, en coupe schématique, d'un dispositif de cisaillage d'assemblages combustibles irradiés réalisé conformément à la présente invention ;

la figure 2 est une vue en bout, en coupe selon la ligne II-II de la figure 1, et

la figure 3 est une vue de dessus, en coupe selon la ligne III-III de la figure 2.

Le dispositif de cisaillage représenté sur les figures comprend une enceinte de confinement 10 définissant une cellule de cisaillage 12 dans laquelle est disposé un châssis 14 supportant les différents organes de la machine. Le châssis 14 s'étend entre une cloison avant 10a et une cloison arrière 10b de l'enceinte 10 et il est obturé de façon étanche à son extrémité supérieure par un couvercle 16 divisant la cellule 12 en une zone fortement contaminée située en-dessous du couvercle 16 et dans laquelle s'effectuent les différentes opérations sur les assemblages A, et une zone faiblement contaminée située au-dessus du couvercle, et pouvant contenir différents appareillages (non représentés).

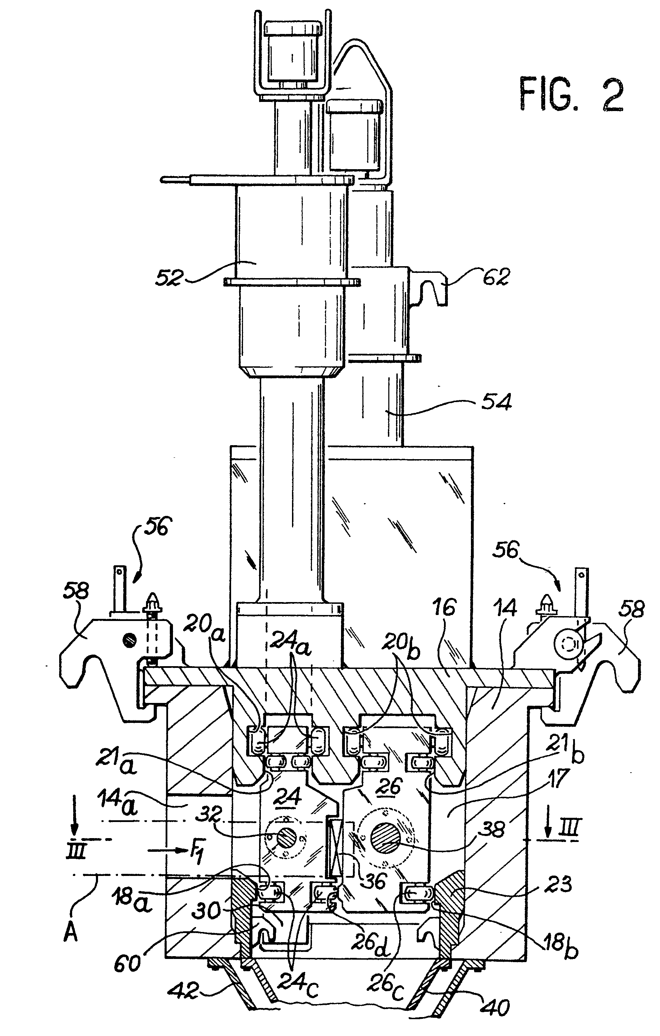

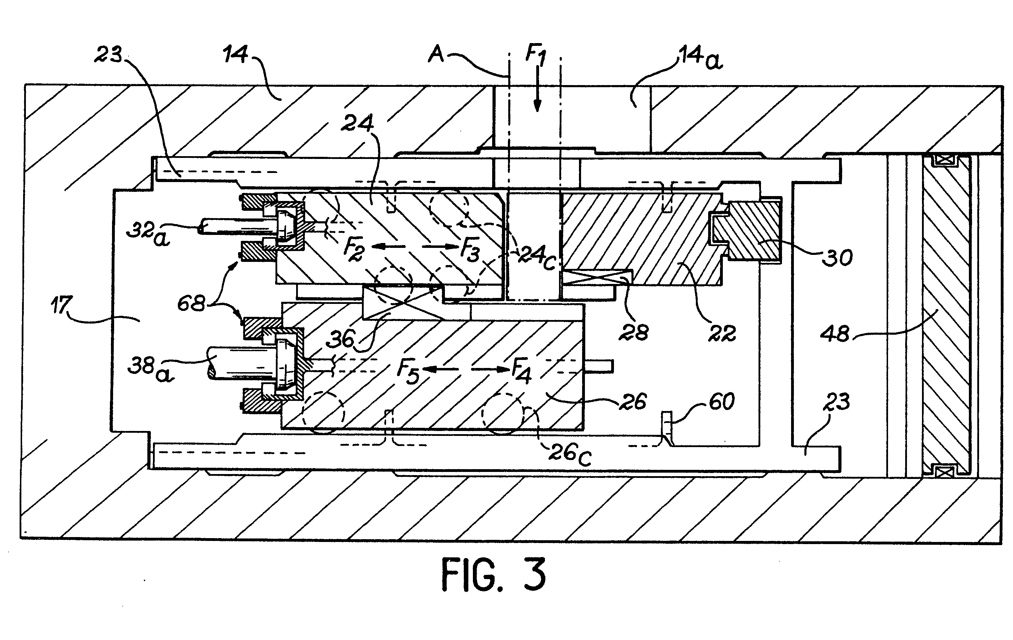

Le châssis 14 comporte deux cloisons latérales définissant entre elles un couloir horizontal 17 (figure 2) qui s'étend depuis la cloison avant 10a jusqu'à la cloison arrière 10b. Dans ce couloir sont montés de façon connue une contre-lame fixe 28 (figure 3), un chariot serre-flanc 24 apte à appliquer l'assemblage A à cisailler contre la contre-lame, et un chariot porte-lame 26 supportant une lame 36.

De façon également connue, la cloison latérale du châssis 14 la plus proche de la contre-lame 28 et du chariot serre-flanc 24 comporte une fenêtre 14a par laquelle les assemblages A pénètrent dans le couloir 17 selon une direction F₁ perpendiculaire à la direction définie par ce dernier (figures 2 et 3).

Lorsqu'un assemblage A est introduit en position de cisaillage comme l'illustre notamment la figure 3, il fait saillie au-delà de la contre-lame 28, pour venir affleurer le chariot porte-lame 26. La contre-lame 28 est alors placée du côté de la face avant du dispositif, c'est-à-dire du côté de la cloison 10a, par rapport à l'assemblage A, alors que le chariot serre-flanc 24 est placé au contraire du côté de la face arrière du dispositif par rapport à cet assemblage.

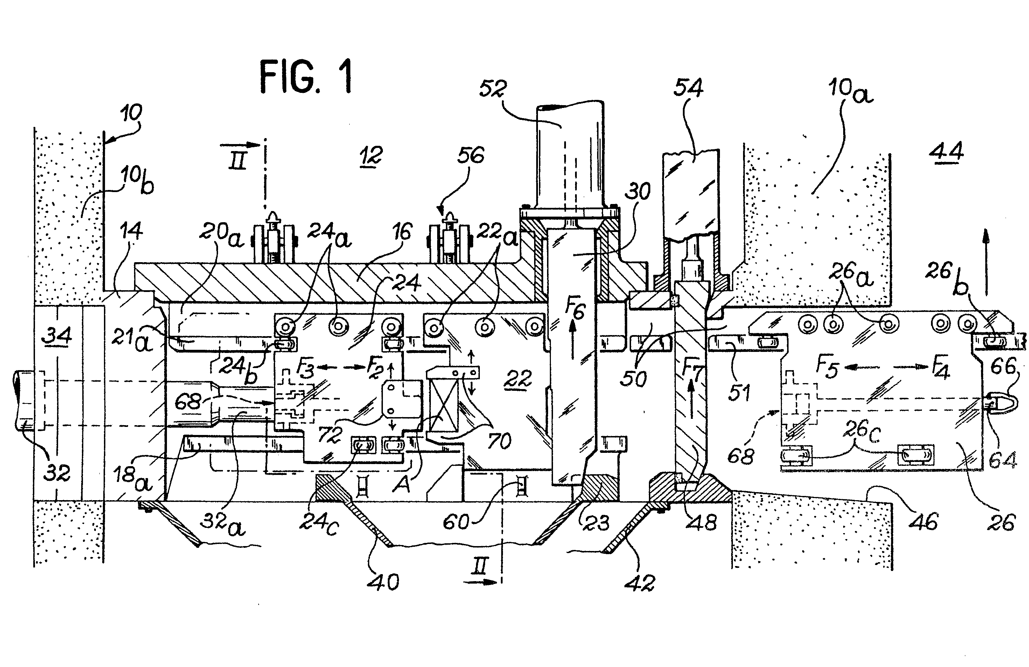

Afin d'appliquer l'assemblage à cisailler contre la contre-lame 28 pour le maintenir lors du cisaillage, le chariot serre-flanc 24 est monté de façon à pouvoir se déplacer en s'éloignant et en se rapprochant de la contre-lame 28 selon la direction définie par le couloir 17 (flèches F₂ et F₃ sur les figures 1 et 3). A cet effet, le chariot est monté sur des rails comme on le verra ultérieurement, et il est relié par sa face arrière à la tige 32a d'un vérin à double effet 32. Afin de faciliter les interventions sur le vérin 32, celui-ci est situé de préférence à l'extérieur de l'enceinte de confinement 10, derrière la cloison arrière 10b. La tige 32a traverse alors la cloison 10b par l'intermédiaire d'une protection neutronique 34.

Afin d'assurer le cisaillage des assemblages, le chariot porte-lame 26 est monté de façon à pouvoir se déplacer dans le couloir 17, à côté de la contre-lame 28 et du chariot serre-flanc 24, selon une direction parallèle à la direction du déplacement de ce dernier (flèches F₄ et F₅ sur les figures 1 et 3). A cet effet, le chariot 26 est également monté sur des rails, et il est relié par sa face arrière à la tige 38a (figure 3) d'un vérin à double effet (non représenté), disposé de préférence à côté du vérin 32, c'est-à-dire à l'extérieur de l'enceinte 10, derrière la cloison 10b.

Conformément à l'invention, la contre-lame 28 est également portée par un chariot contre-lame 22, normalement fixe et en appui contre un organe amovible 30 traversant verticalement le couloir 17 du côté de la face avant du chariot 22. Toutefois, comme on le verra par la suite, le chariot 22 est apte à se déplacer dans la direction définie par le couloir 17 lorsque l'organe 30 est escamoté. A cet effet, il est monté sur les rails qui supportent également le chariot serre-flanc 24.

Comme l'illustrent notamment les figures 1 et 2, ces rails qui supportent les chariots 22 et 24 et autorisent leur déplacement selon la direction définie par le couloir 17 sont constitués par des rainures parallèles en vis-à-vis 20a qui sont formées dans le couvercle 16 du châssis 14. Plusieurs paires de galets 22a à axe horizontal sont montées de part et d'autre du chariot contre-lame 22, à la partie supérieure de celui-ci, et reposent sur les bords inférieurs des rainures 20a qui assurent ainsi le supportage du chariot 22, tout en autorisant son déplacement éventuel selon la direction définie par le couloir. De façon comparable, plusieurs paires de galets 24a à axe horizontal sont montées de part et d'autre du chariot serre-flanc 24, à la partie supérieure de celui-ci, et reposent sur le bord inférieur des rainures 20a qui assurent ainsi également le supportage du chariot 24, tout en autorisant son déplacement lors de la mise en œuvre du vérin 32.

Afin d'assurer un guidage latéral correct du chariot serre-flanc 24 lors de son déplacement, on prévoit en outre sur le couvercle 16, juste en dessous des rainures 20a, deux bandes de roulement en vis-à-vis 21a qui se présentent sous la forme de surfaces planes sensiblement verticales sur lesquelles viennent rouler des paires de galets 24b, à axe vertical, placés sur le chariot 24 juste en dessous des galets 24a. On prévoit de plus sur une partie amovible 23 du châssis 14 placée à l'extrémité inférieure du couloir 17, une autre bande de roulement 18a disposée dans le même plan vertical que la bande de roulement 21a la plus proche de la paroi dans laquelle est ménagée la fenêtre 14a. Une autre bande de roulement 26d faisant face à la bande de roulement 18a et disposée dans le même plan vertical que l'autre bande de roulement 21a est formée sur le chariot porte-lame 26. Des paires de galets 24c, à axe vertical, sont également montées à la partie inférieure du chariot 24 et de part et d'autre de celui-ci, pour venir rouler sur les bandes de roulement 18a et 26d, respectivement.

Une structure comparable à celle qui vient d'être décrite pour assurer le supportage et le guidage latéral du chariot 24 est prévue pour le chariot 26.

Ainsi, on voit sur la figure 2 que le couvercle 16 comporte également, au-dessus du chariot 26 et au même niveau que les rails 20a, deux rails 20b constitués par deux rainures en vis-à-vis parallèles aux rainures 20a et dans lesquelles sont reçues des paires de galets 26a, à axe horizontal, montées à la partie supérieure du chariot 26 et de part et d'autre de celui-ci.

Le couvercle 16 définit aussi, juste en dessous des rainures 20b, des bandes de roulement planes et verticales 21b sur lesquelles viennent en appui des paires de galets 26b, à axe vertical, montées de part et d'autre du chariot 26, juste en dessous des galets 26a.

Enfin, la partie amovible 23 du châssis 14 comporte, au niveau de la bande de roulement 18a et en face de celle-ci, une bande de roulement 18b sur laquelle viennent en appui des galets 26c, à axe vertical, montés à la partie inférieure du chariot 26, sur le côté opposé à la bande de roulement 26d.

Compte tenu du fait que le chariot contre-lame 22 est normalement immobile pendant le fonctionnement du dispositif de cisaillage, il ne comporte pour sa part aucune roulette de guidage latéral.

Au cours de l'introduction ou de l'avance de l'assemblage A après un cisaillage (flèche $F_1$), le chariot serre-flanc 24 est écarté du chariot contre-lame 22 sous l'action du vérin double effet 32 (flèche $F_2$). Lorsque l'extrémité de l'assemblage A vient affleurer le chariot porte-lame 26 comme l'illustre la figure 3, l'assemblage est maintenu par le chariot serre-flanc 24 en appui contre le chariot contre-lame 22 sous l'action du vérin 32 (flèche $F_3$). Le chariot porte-lame 26 occupe alors la position représentée sur la figure 3 dans laquelle la lame 36 se trouve au niveau du chariot serre-flanc 24. Le cisaillage d'un tronçon de l'assemblage A est alors réalisé en déplaçant le chariot porte-lame 26 dans le sens de la flèche $F_4$ sur la figure 3 sous l'action du vérin (non représenté) dont la tige est désignée par la référence 38a sur les figures. Le tronçon cisaillé tombe alors par gravité dans une trémie ou goulotte 40 solidaire de la partie amovible 23 du châssis 14. Cette trémie 40 est entourée d'une seconde trémie ou goulotte 42 fixée au fond du châssis 14.

Conformément à l'invention, il est possible de démonter les chariots 22, 24 et 26 sans enlever le couvercle 16. A cet effet, on a déjà vu que le chariot 22 est muni comme les chariots 24 et 26 de roulettes lui permettant de se déplacer le long des rails 20a et 20b. Pour la même raison, on a également vu que ce chariot 22 est en appui sur un organe 30 présentant un caractère amovible.

Afin de compléter ces caractéristiques et de permettre de réaliser les interventions d'exploitation souhaitées sur les chariots 22, 24 et 26 qui portent les principales pièces d'usure que sont la lame et la contre-lame, on prévoit de plus, conformément à l'invention, de juxtaposer à la cellule de cisaillage 12 une cellule d'intervention 44 qui communique avec la cellule 12 par un passage 46 ménagé dans la cloison avant 10a de l'enceinte de confinement 10. Le passage 46 est disposé dans le prolongement des trajectoires des chariots 22, 24 et 26 définies par les rails 20a et 20b et il présente une dimension suffisante pour permettre le passage de ces chariots dans la cellule d'intervention 44. En fonctionnement, le passage 46 est normalement obturé de façon étanche par un opercule 48 placé par exemple à l'intérieur de la cellule 12. Enfin, afin d'assurer le guidage et le supportage des chariots lorsqu'une intervention d'exploitation nécessite de les amener de la cellule 12 dans la cellule 44, puis de les ramener dans la cellule 12, on voit sur la figure 1 que les rails de supportage 20a et 20b ainsi que les bandes de roulement 21a et 21b formées dans le couvercle 16 se prolongent de part et d'autre de l'opercule 48, à l'intérieur du passage 46 et dans la cellule d'intervention 44 sous la forme de rails 50 et de bandes de roulement 51, respectivement.

Grâce à ces caractéristiques, on comprend qu'il est aisé d'intervenir sur l'un quelconque des chariots 22, 24 et 26 en l'amenant dans la cellule d'intervention 44 comme on l'a représenté pour le chariot 26 sur la figure 1. Pour cela il suffit d'escamoter l'organe 30 sur lequel est normalement en appui le chariot contre-lame 22 et l'opercule 48 assurant normalement l'étanchéité entre les cellules 12 et 44. A cet effet, on voit sur la figure 1 que l'organe 30 peut se déplacer verticalement vers le haut (flèche $F_6$) sous l'action d'un mécanisme de commande tel qu'un vérin 52. De façon comparable, l'opercule 48 peut également se déplacer verticalement vers le haut (flèche $F_7$) sous l'action d'un mécanisme de commande tel qu'un vérin 54. Bien entendu, les courses de l'organe 30 et de l'opercule 48 sont suffisantes pour permettre aux chariots de passer librement de la cellule 12 à la cellule 44 et inversement.

Conformément à l'invention, les caractéristiques qui viennent d'être décrites permettent de réduire très sensiblement le temps d'intervention par rapport aux dispositifs de cisaillage de la technique antérieure, tout en évitant la dispersion de la contamination au-dessus du couvercle 16 du châssis 14.

Dans certains cas extrêmes correspondants par exemple à une usure des rails de guidage 20a ou 20b, des bandes de roulement 18a, 18b, 21a et 21b ou de la goulotte 40, il est nécessaire de démonter des organes du dispositif de cisaillage autres que les pièces d'usure habituelles. A cet effet, et comme l'illustre notamment la figure 2, les rails de guidage 20a et 20b et les bandes de roulement 21a et 21b sont formés comme on l'a vu directement sur le couvercle 16, et celui-ci peut être démonté du châssis 14 en agissant sur des pinces d'assemblage 56 d'un type connu, prévues à cet effet. Dans ce type d'intervention exceptionnelle, le couvercle 16 ainsi que les chariots qu'il supporte sont dégagés vers le haut à l'intérieur de la cellule de cisaillage 12. Lorsque cela est nécessaire, il est ensuite possible d'extraire par l'ouverture ainsi laissée libre dans le châssis 14 la pièce 23 portant les bandes de roulement 18a et 18b et la goulotte 40.

Compte tenu des conditions particulières d'intervention, on comprend que les différentes opérations qui viennent d'être décrites sont effectuées à distance, par exemple au moyen de télémanipulateurs. A cet effet, les différentes pièces qui doivent être manœuvrées sont pourvues de crochets de manutention et de levage tels que 58 pour les pinces de serrage 56, 60 pour la pièce 23 ou 62 pour le boîtier du vérin 54.

Lorsque les chariots 22, 24 et 26 doivent être amenés dans la cellule d'intervention 44, il est également nécessaire de les déconnecter à distance des tiges de vérins 32a et 38a et de les tirer vers la cellule 44. A cet effet, des moyens de liaison démontables à distance tels que des moyens de liaison à baïonnette 68 peuvent être prévus entre les tiges des vérins et les chariots. Comme l'illustre la figure 1, le verrouillage et le déverrouillage de ces moyens de liaison peuvent être commandés à l'aide d'une tige tournante telle que 64 pour le chariot 26, cette tige débouchant sur la face avant du chariot et étant pourvue à ce niveau d'un crochet 66 autorisant sa manutention à distance.

Bien entendu, le dispositif selon l'invention peut être utilisé pour cisailler des assemblages de différentes sections et on comprendra que la fenêtre 14a présente pour cette raison une dimension suffisante pour permettre le passage des assemblages de plus grande section. Pour la même raison, on prévoit sur le chariot contre-lame 22 des pièces de guidage règlables 70 et, sur le chariot serre-flanc 24, des pièces d'appui règlables 72.

### Revendications

1. Dispositif de cisaillage d'assemblages combustibles irradiés comprenant une cellule de confinement (12) dans laquelle est disposé un châssis (14) supportant au moins une contre-lame fixe (28), au moins un chariot serre-flanc (24) apte à appliquer un assemblage (A) à cisailler contre la contre-lame et au moins un chariot porte-lame (26) pour cisailler ledit assemblage, caractérisé en ce que la contre-lame est montée sur un chariot contre-lame (22) normalement en appui contre un organe amovible (30), en ce que le chariot contre-lame, le chariot serre-flanc et le chariot porte-lame sont montés sur des rails (20a, 20b) disposés selon une direction perpendiculaire à la contre-lame, et en ce que la cellule de confinement (12) communique avec une cellule d'intervention (44) par un passage (46) normalement obturé par un opercule (48), les rails se prolongeant (50) dans la cellule d'intervention par ledit passage, dont les dimensions permettent d'acheminer lesdits chariots (22, 24, 26) dans la cellule d'intervention lorsque l'organe amovible (30) et l'opercule (48) sont escamotés.

2. Dispositif selon la revendication 1, caractérisé en ce que le châssis (14) est obturé à son extrémité supérieure par un couvercle amovible (16) à l'intérieur de la cellule de confinement et portant une partie (20a) des rails.

3. Dispositif selon la revendication 2, caractérisé en ce que le châssis (14) comporte à son extrémité inférieure une partie (23) amovible après enlèvement dudit couvercle (16), ladite partie amovible portant des bandes de roulement (18a, 18b) assurant le guidage latéral du chariot serre-flanc (24) et du chariot porte-lame (26) et une trémie (40) dans laquelle tombent les tronçons cisaillés dudit assemblage.

### Claims

1. Shearing device for irradiated fuel assemblies comprising a confinement cell (12) in which is located a frame (14) supporting at least one fixed blade (28), at least one clamp-carriage (24) adapted to hold an assembly (A) to be sheared against the fixed blade, and at least one blade-holder carriage (26) for shearing said assembly, characterized in that the fixed blade is mounted on a fixed-blade carriage (22) normally bearing against a detachable member (30), and in that the fixed-blade carriage, the clamp carriage and the blade-holder carriage are mounted on rails (20a, 20b) disposed in a direction perpendicular to the fixed blade, and in that the confinement cell (12) communicates with an intervention cell (44) through a passage (46) which is normally closed by a door (48), the rails extending (50) into the intervention cell through said passage, whose dimensions enable passage of said carriages (22, 24, 26) into the intervention cell when the detachable member (30) and the door (48) are retracted.

2. A device according to claim 1, characterized in that the frame (14) is closed at its upper end by a detachable lid (16) within the interior of the confinement cell and carrying a part (20a) of the rails.

3. A device according to claim 2, characterized in that the frame (14) has at its lower end a portion (23) detachable after removal of said lid (16), said detachable portion carrying rollers (18a, 18b) ensuring the lateral guidance of the clamp carriage (24) and the blade holder carriage (26), and a hopper (40) into which fall the sheared-off portions of said assembly.

### Patentansprüche

1. Schervorrichtung für bestrahlte Brennstoffbündel mit einer Einschließkammer (12), in der ein Gestell (14) angeordnet ist, welches wenigstens ein festes Gegenmesser (28) trägt, mindestens einem Wagen zum Niederhalten (24), mit dem ein abzuscherendes Bündel (A) gegen das Gegenmesser drückbar ist, und wenigstens einem Messerträgerwagen (26) zum Abscheren des Bündels, dadurch gekennzeichnet, daß das Gegenmesser an einem Gegenmesserwagen (22) befestigt ist, der normalerweise gegen ein einziehbares Organ (30) drückt, daß der Gegenmesserwagen, der Wagen zum Niederhalten und der Messerträgerwagen auf Schienen (20a, 20b) angeordnet sind, die längs einer zu dem Gegenmesser senkrechten Richtung angeordnet sind, und daß die Einschließkammer (12) mit einer Eingriffskammer (44) über einen normalerweise mittels eines Deckels (48) versperrten Durchgang (46) in Verbindung steht, und daß sich die Schienen (50) in die Eingriffskammer durch den Durchgang hindurch erstrecken, dessen Abmessungen ermöglichen, die Wagen (22, 24, 26) in die Eingriffszelle zu befördern, wenn das einziehbare Organ (30) und der Deckel (48) eingezogen sind.

2. Vorrichtung nach Anspruch 1, dadurch gekennzeichnet, daß das Gestell (14) an seinem oberen Ende mit einem Deckel verschlossen ist, der im Inneren der Einschließkammer abnehmbar ist und einen Teil (20a) der Schienen trägt.

3. Vorrichtung nach Anspruch 2, dadurch gekennzeichnet, daß das Gestell (14) an seinem unteren Ende einen Teil (23) umfaßt, der nach Entfernen des genannten Deckels (16) herausnehmbar ist, und daß der herausnehmbare Teil Laufbahnen (18a, 18b), die die Seitenführung des Wagens (24) zum Niederhalten und des Messerträgerwagens (26) sicherstellen, und eine Rutsche (40) trägt, in die die abgescherten Stücke der Bündel fallen.

FIG. 1

0 094 883

FIG. 2

FIG. 3